**Europäisches Patentamt**

**European Patent Office**

**Office européen des brevets**

(19)

(11) Veröffentlichungsnummer: **0 121 130**

**B1**

(12) # EUROPÄISCHE PATENTSCHRIFT

(45) Veröffentlichungstag der Patentschrift:
26.11.86

(21) Anmeldenummer: **84102346.8**

(22) Anmeldetag: **05.03.84**

(51) Int. Cl.⁴: **C 25 C 7/06**

(54) **Verfahren und Vorrichtung zum Reinigen von bei der elektrolytischen Raffination von Metallen gewonnenen Kathoden- und/oder Anodenplatten.**

(30) Priorität: **05.03.83 DE 3307890**

(43) Veröffentlichungstag der Anmeldung:
**10.10.84 Patentblatt 84/41**

(45) Bekanntmachung des Hinweises auf die Patenterteilung:
**26.11.86 Patentblatt 86/48**

(84) Benannte Vertragsstaaten:
**BE DE FR GB SE**

(56) Entgegenhaltungen:
**WO-A-83/02289**
**DE-C-891 648**
**GB-A-1 449 545**
**US-A-3 499 207**

(73) Patentinhaber: **WENMEC AB, Box 107, S-665 00 Kil (SE)**

(72) Erfinder: **Norberg, Gustav Sixten Ingvar, Lundegatan 9, S-653 49 Karlstad (SE)**
Erfinder: **Segerström, Kjell Erik Lennart, Fack 110 30, S-650 11 Karlstad (SE)**
Erfinder: **Ahl, Tommy Evert, S-655 00 Kil (SE)**

(74) Vertreter: **Neugebauer, Erich, Dr., Postfach 260101 Zweibrückenstrasse 10, D-8000 München 26 (DE)**

LIBER, STOCKHOLM 1986

## Beschreibung

Die vorliegende Erfindung betrifft ein Verfahren und eine Vorrichtung zum Reinigen von bei der elektrolytischen Raffination von Metallen gewonnenen Kathoden- und Anodenplatten, insbesondere aus Kupfer, die an Tragstangen bzw. Tragohren hängend gruppenweise aus dem elektrolytischen Bad herausgehoben und mittels Wasserstrahlen gewaschen werden.

Die elektrolytische Raffination von Kupfer erfolgt in elektrolytischen Bädern, wobei reines Kupfer als Kathodenplatten auf Startblechen niedergeschlagen wird, die aus dünnen Blechen aus reinem Kupfer bestehen. Diese Startbleche sind mit Tragösen versehen, an denen sie auf Tragstangen hängend gruppenweise in vorbestimmten Abständen voneinander in elektrolytische Bäder gehängt werden. Auf die in dem elektrolytischen Bad hängenden Startbleche wird das reine Kupfer niedergeschlagen, wobei die ursprünglich sehr dünnen, vorzugsweise 0,8 mm dicken, Startbleche zu steifen Kathodenplatten werden mit einem Gewicht von 100 kg oder mehr. Diese Kathodenplatten werden üblicherweise in Gruppen von acht, sechzehn, zweiunddreißig oder vierundsechzig Platten in elektrolytische Bäder eingehängt und nach dem Abscheiden des reinen Kupfers auch in entsprechenden Gruppen von acht, sechzehn, zweiunddreißig oder vierundsechzig Platten aus den elektrolytischen Bädern herausgehoben.

Die Kathodenplatten müssen nach dem Herausheben aus dem elektrolytischen Bad gewaschen werden, um sie von Resten des elektrolytischen Bades zu reinigen. Hierzu werden die Kathodenplatten üblicherweise an ihren Tragstangen hängend durch eine Waschvorrichtung senkrecht zu ihren Flachseiten hintereinander hindurchbewegt, wobei die Abstände zwischen den Kathodenplatten den Abständen der Kathodenplatten im elektrolytischen Bad entsprechen. Da diese Abstände im allgemeinen relativ gering sind, z.B. etwa 10 bis 12 cm, ist es nur möglich, die Flachseiten der Kathodenplatten bei deren Durchgang durch die Waschvorrichtung von den Stirnseiten her oder von oben und unten mittels Waschstrahlen zu besprühen. Es hat sich nun gezeigt, daß das Ergebnis der Waschung der Kathodenplatten bei dieser Arbeitsweise im allgemeinen nicht befriedigend ist und daß Verunreinigungen an den Kathodenplatten verbleiben. Dies gilt insbesondere auch von den Tragösen, die auf den Tragstangen aufliegen. Die Tragstangen werden aber erst nach dem Waschen aus den Tragösen der Kathodenplatten entfernt. Dabei verdecken die Tragstangen beim Waschen Bereiche innerhalb und außerhalb der Tragösen, so daß diese Bereiche von den Wasserstrahlen beim Waschen nicht erreicht werden. Die Tragstangen werden nach ihrem Entfernen aus den Tragösen einer erneuten Verwendung zugeführt. Die von den Tragstangen befreiten Kathodenplatten werden dann zu Paketen aufeinandergestapelt (US-A-3 499 207).

Auch bei Anodenplatten ist es wichtig, daß sie nach dem Herausholen aus dem Elektrolysebad gründlich gereinigt werden. Diese Platten hängen in der Regel mit seitlichen Tragohren in relativ geringen Abständen an einem Kettenförderer, so daß sie von den Wasserstrahlen nur unvollkommen erfaßt werden, wenn sie hängend senkrecht zu ihren Flachseiten durch die Waschvorrichtung hindurch bewegt werden.

Bei der Herstellung von Startblechen ist es bekannt, daß diese von bipolaren Elektrodenplatten abgelöst werden, nachdem sie vorher hängend parallel zu ihren Flachseiten durch eine Waschvorrichtung hindurch bewegt worden sind (GB-A-1 449 545). Bei einer Vorrichtung zum Beizen von Blechen (DE-C-891 648) ist es ferner bekannt, die Bleche in Haken nach vorn geneigt stehend, senkrecht zu ihren Flachseiten in dichter Reihenfolge durch den Beiztrog hindurchzubewegen. Nach dem Verlassen des Beiztrogs kippen die Bleche aus den Haken auf eine schwenkbare Schrägfläche, von der sie so auf einen Rollgang gestellt werden, daß sie auf ihrer bisherigen Oberkante zu stehen kommen. Der Rollgang bringt sie dann zu einer Reinigungsvorrichtung.

Der vorliegenden Erfindung liegt die Aufgabe zugrunde, ein verbessertes Verfahren und eine verbesserte Vorrichtung zum Reinigen von bei der elektrolytischen Raffination von Metallen aus dem elektrolytischen Bad entnommenen Kathoden- und Anodenplatten zu schaffen, bei dem ein besonders hoher Reinigungsgrad der Platten erzielt wird.

Diese Aufgabe wird nach dem erfindungsgemäßen Verfahren zum Reinigen von Kathodenplatten dadurch gelöst, daß die Tragstangen vor dem Waschen durch Ausstoßen und/oder Ausziehen aus den Tragösen oder durch Auftrennen und/oder Abtrennen der Tragösen entfernt werden und die Kathodenplatten an ihrer Unterseite abgestützt in im wesentlichen senkrechter Lage einzeln oder paarweise etwa V-förmig gegeneinander geneigt oder zu dritt oder mehr etwa fächerförmig voneinander weggeneigt, hintereinander in einer sich etwa parallel zu ihren Flachseiten erstreckenden Richtung den Waschvorgang durchlaufen und mindestens die Flachseiten der Kathodenplatten mittels Düsen besprüht werden, die eine Relativbewegung entlang der Flachseiten ausführen.

Das erfindungsgemäße Verfahren zum Reinigen von Kathodenplatten bietet den Vorteil daß es möglich ist, die Kathodenplatten von allen Seiten, auch von den Flachseiten her, ungehindert mittels der Waschstrahlen abzusprühen, und da die Tragstangen vor dem Waschen entfernt werden, wird vermieden, daß während des Waschvorgangs Verunreinigungen in dem für die Waschstrahlen unzugänglichen Bereich zwischen Tragstangen und Tragösen verbleiben.

Die der vorliegenden Erfindung zugrunde liegende Aufgabe wird bei dem erfindungsgemäßen Verfahren zum Reinigen von Anodenplatten dadurch gelöst, daß die Anodenplatten vor dem Waschen mittels eines zweiten Kettenförderers, in im wesentlichen senkrechter Lage einzeln oder paarweise etwa V-förmig gegeneinander geneigt oder zu dritt oder mehr etwa fächerförmig voneinander weggeneigt, abgestützt und in der vorgenannten Lage gehalten hintereinander in einer sich etwa parallel zu ihren Flachseiten erstreckenden Richtung den Waschvorgang durchlaufen und daß mindestens die Flachseiten der Anodenplatten mittels eine Relativbewegung entlang der Flachseiten ausführenden Düsen besprüht werden.

Das erfindungsgemäße Verfahren zum Reinigen von Anodenplatten bietet den Vorteil, daß ein sehr hoher Reinigungsgrad erzielt wird, wobei es vorteilhaft sein kann, daß zu waschende Abfallanodenplatten auf den Kopf gestellt, mit ihrer Kopfseite auf dem zweiten Kettenförderer abgestützt gewaschen werden.

Vorteilhafte Weiterbildungen des erfindungsgemäßen Verfahrens zum Reinigen von Kathodenplatten sind in den Patentansprüchen 4 und 5 beschrieben.

Die vorliegende Erfindung betrifft ferner die Vorrichtungen, die in den Patentansprüchen 6 bis 16 dargestellt sind.

Im folgenden wird die Erfindung anhand schematischer Zeichnungen an Ausführungsbeispielen näher erläutert Es zeigt:

Fig. 1 den schematischen Grundriß einer Anlage, in der Kathodenplatten nach dem erfindungsgemäßen Verfahren gewaschen werden;

Fig. 2 den Aufriß einer Anlage nach Fig. 1;

Fig. 3 den Übergang der Kathodenplatten von dem ersten auf den zweiten Kettenförderer;

Fig. 4 einen Teil des Grundrisses nach Fig. 1 in vergrößertem Maßstab;

Fig. 5 und 6 die Stapel- und Wendevorrichtung für die Tragstangen in zwei verschiedenen Stellungen;

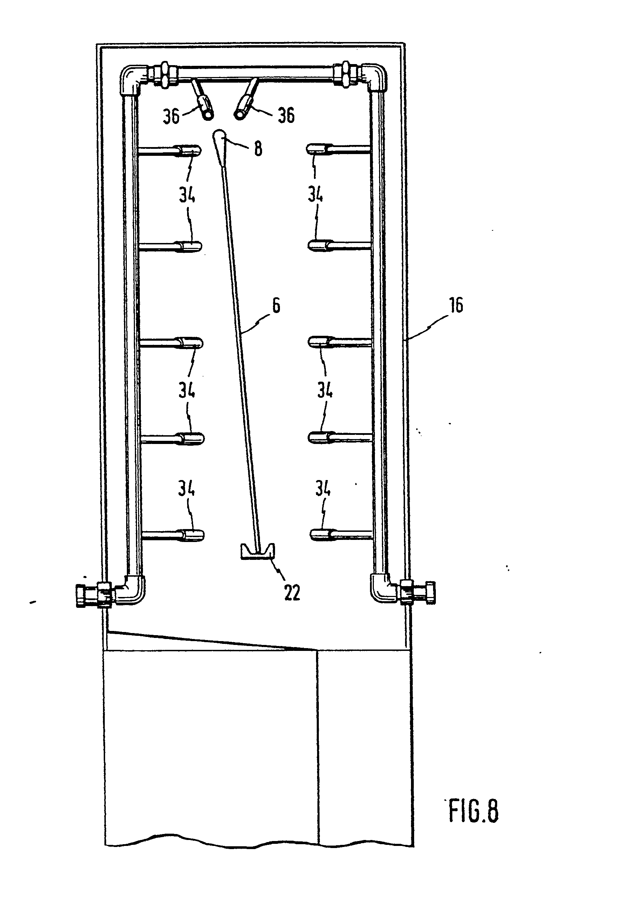

Fig. 7 und 8 die Anordnung der Spritzdüsen in den Waschkammern im Grundriß und Aufriß;

Fig. 9 und 10 ein erstes Ausführungsbeispiel der Abnahme- und Stapelvorrichtung für die gewaschenen Kathodenplatten in Vorder- und Seitenansicht;

Fig. 11 und 12 ein zweites Ausführungsbeispiel der Abnahme- und Stapelvorrichtung für die gewaschenen Kathodenplatten in Vorder- und Seitenansicht;

Fig. 13 den Greifer für die Abnahme- und Stapelvorrichtung nach Fig. 11 und 12; und

Fig. 14 eine Übertragungsvorrichtung für jeweils zwei Platten.

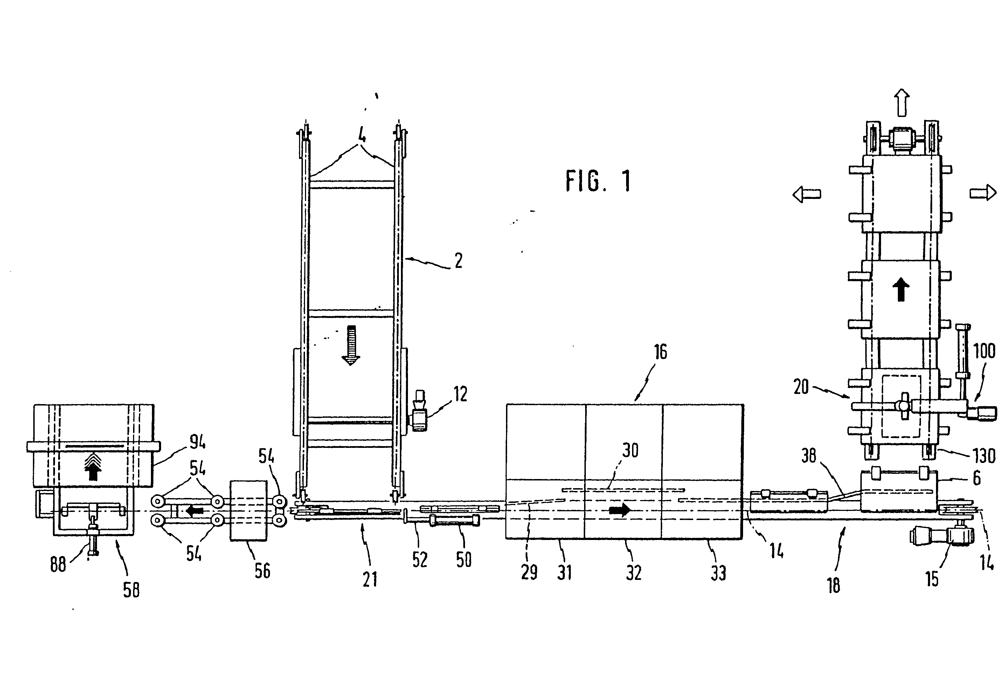

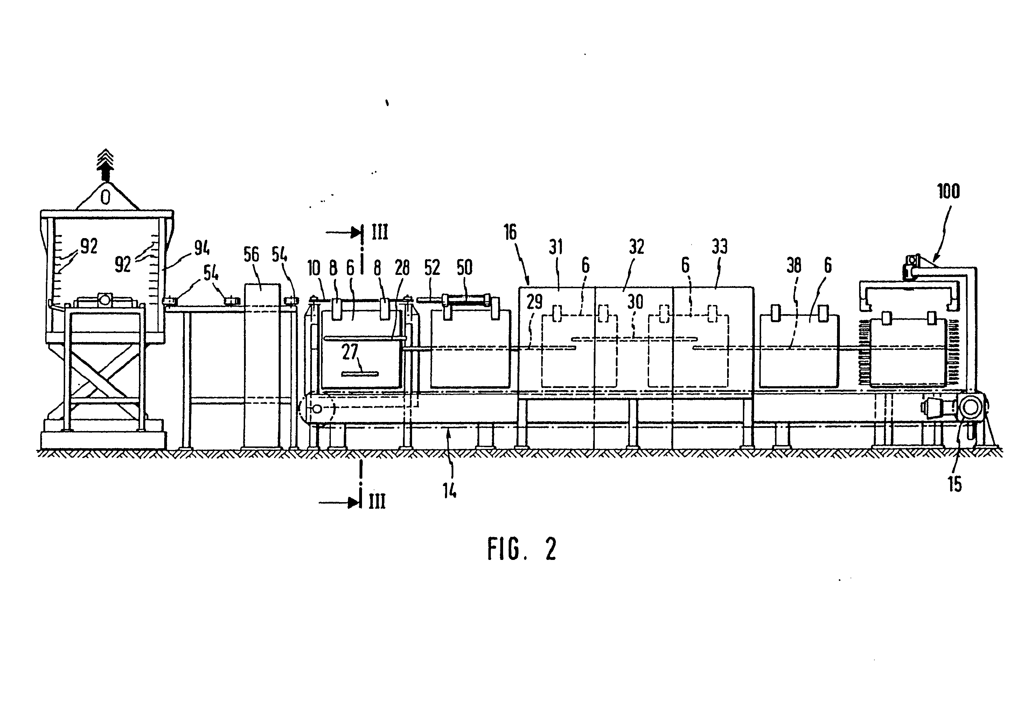

Die in den Figuren 1 und 2 als Ausführungsbeispiel dargestellte Anlage, die zur Durchführung des Verfahrens nach der Erfindung vorgesehen ist, enthält eine Zuführungseinrichtung 2, die aus einem ersten Kettenförderer 4 mit zwei Kettensträngen besteht. Auf diesen werden die mit einem Kran oder dgl. aus den Elektrolysebädern jeweils als Einheit aus z.B. acht, sechzehn, zweiunddreißig oder vierundsechzig gemeinsam erfaßten Kathodenplatten 6, die mit Ösen 8 an Tragstangen 10 hängen, aufgesetzt und senkrecht zu ihren Flachseiten weiterbewegt. Der Kettenförderer 4 wird von einem Motor 12 absatzweise angetrieben. An seinem Ende ist ein zweiter, ebenfalls schrittweise angetriebener Kettenförderer 14 vorgesehen, auf den die Kathodenplatten 6 mittels einer ersten Übergabevorrichtung 21 einzeln übergeleitet werden und der sie parallel zu ihren Flachseiten durch die Waschanlage 16 hindurch bis zu einer zweiten Übergabevorrichtung 18 an eine Stapelstelle 20 weiterbefördert.

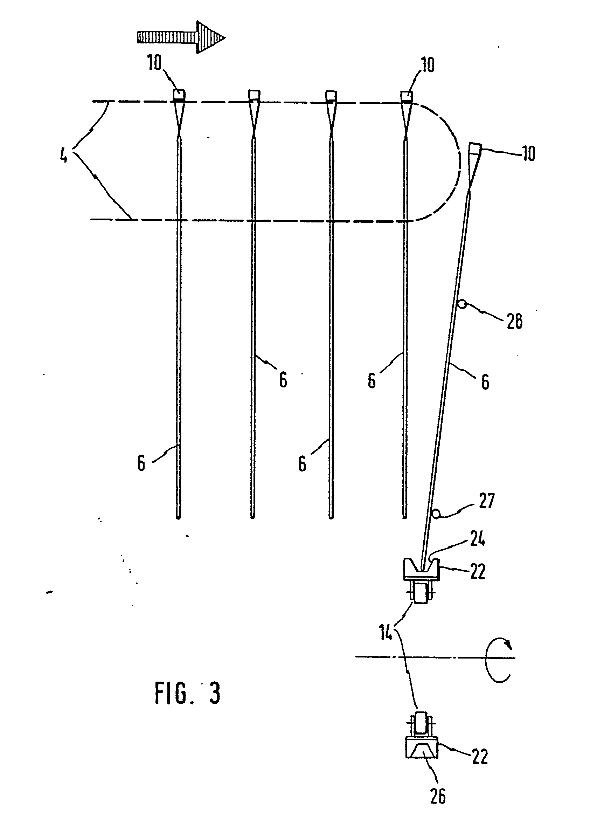

Der zweite Kettenförderer 14 besteht nur aus einem Kettenstrang. Dieser ist an seinem äußeren Umfang mit Abstützgliedern 22 (Fig. 3) versehen, die auf ihrer Oberseite eine breite, sich nach außen erweiternde Rille 24 aufweisen, in die die Kathodenplatten 6 mit ihrer Unterkante hineingestellt werden. Die Rille ist bei jedem zweiten Abstützglied 22 an ihrem in Förderrichtung hinteren Ende mit einer Querwand 26 versehen, die die Mitnahme der in der Rille stehenden Kathodenplatte 6 sicherstellt. Die Übergabe der Kathodenplatten von dem ersten auf den zweiten Kettenförderer geschieht an der Umkehrstelle 21 des ersten Kettenförderers, der beim Übergang seiner Ketten auf das Untertrum die Tragstangen 10 mit den Kathodenplatten 6 einzeln freigibt. Diese bleiben dann zunächst auf den Abstützgliedern 22 des zweiten Kettenförderers 14 stehen, wobei sie sich in Richtung ihrer bisherigen Förderbewegung um etwa 5° geneigt an einstellbaren Leisten oder Rollen 27, 28 abstützen, wie im einzelnen aus Fig. 3 ersichtlich ist.

Zum Entfernen der Tragstangen 10 aus den Ösen 8 ist ein durch einen hydraulischen Zylinder 50 verschiebbarer Stößel 52 vorgesehen, der an der der Waschanlage 16 zugewandten Stirnseite der Tragstangen 10 angreift und diese soweit verschiebt, bis ihr anderes Ende in den Wirkungsbereich von Förderrollen 54 gelangt, die die Tragstangen 10 völlig aus den Ösen 8 herausziehen.

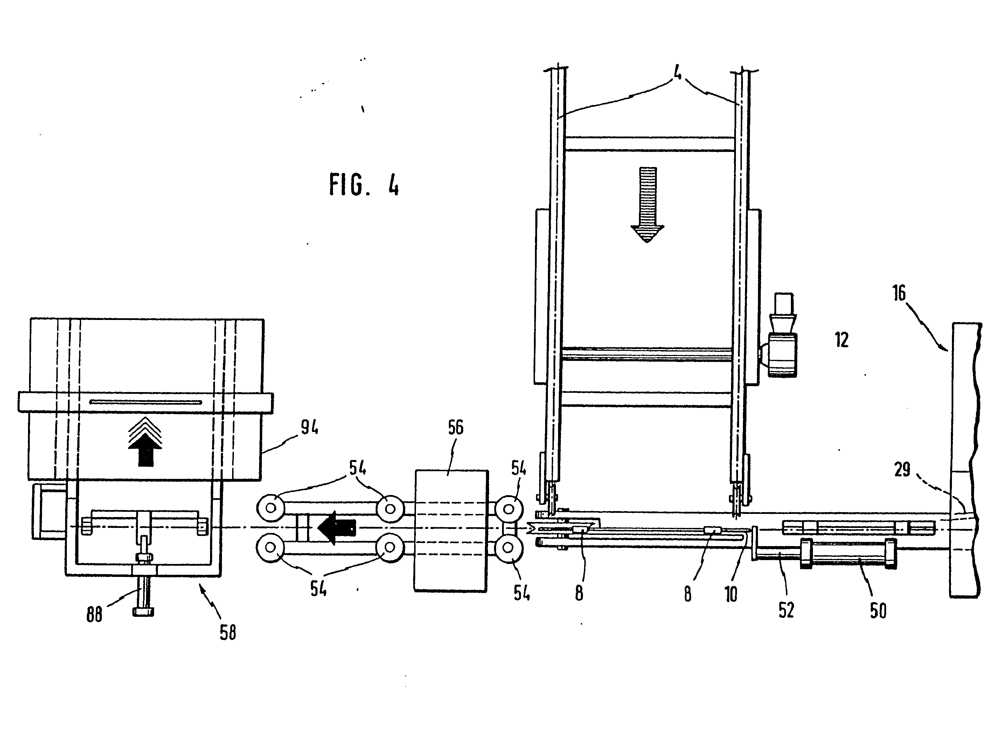

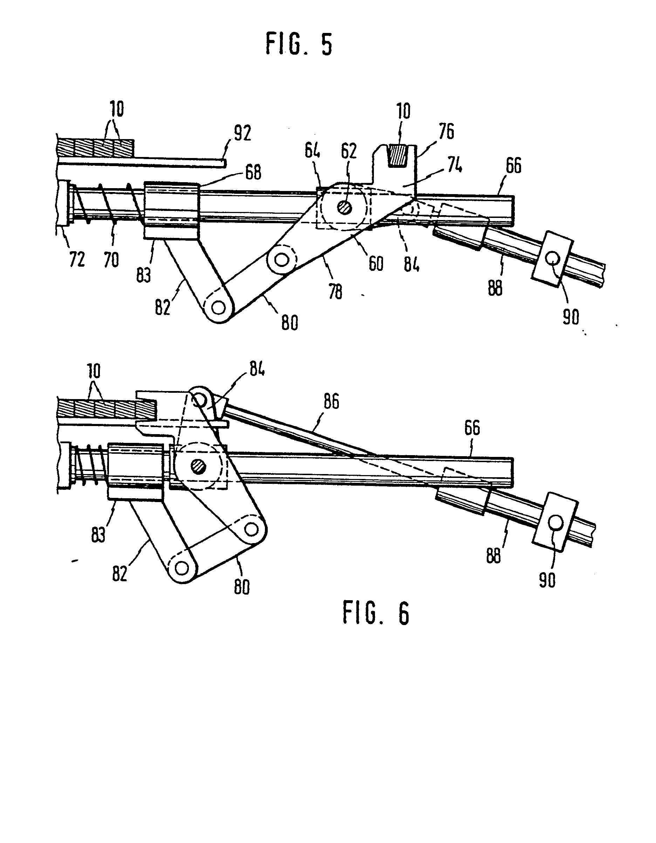

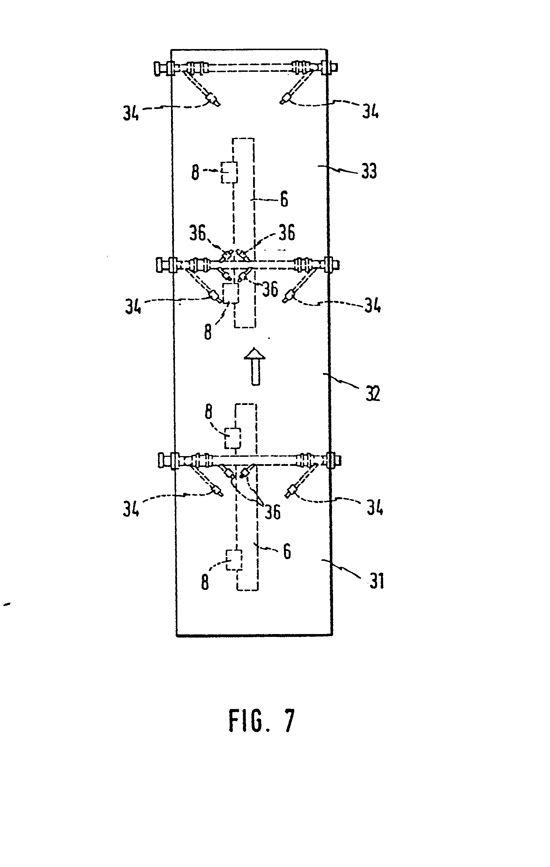

Die Tragstangen durchlaufen dabei eine Wascheinrichtung 56 (Fig. 4), in der sie von anhaftenden Verunreinigungen gesäubert werden. Danach werden die Tragstangen 10 mittels einer Stapelvorrichtung 58 in einem Magazin 94 abgelegt. Um Tragstangen, die einen rechteckigen, ovalen oder tropfenförmigen Querschnitt aufweisen, in die für ihre spätere Verwendung notwendige flache Lage zu bringen, ist die Stapelvorrichtung 58 als hydraulisch betriebene Wendevorrichtung ausgebildet. Diese weist, wie Fig. 5 und 6 zeigen, zwei doppelarmige Hebel 60 auf, die auf einer Welle 62 drehfest angebracht sind. Die Welle 60 ist an ihren Enden in je einem ersten Gleitstück 64 drehbar gelagert, die auf je einer Führungsschiene 66 bis an ein zweites Gleitstück 68 verschiebbar sind, das über eine Feder 70 an dem Gestell 72 der Vorrichtung abgestützt ist. Die doppelarmigen Hebel 60 sind an ihren einen Arm 74 mit einer dem Profil der Tragstangen 10 angepaßten Klaue 76 versehen, in die die Tragstangen 10 nach dem Herausziehen aus der Kathodenplatte 6 hineingeschoben werden. Der zweite Arm 78 des doppelarmigen Hebels 60 ist über einen Lenker 80 mit einem Arm 82 verbunden, der über ein waagerechtes Zwischenstück 83 an dem zweiten Gleitstück 68 befestigt ist. Auf der die doppelarmigen Hebel 60 tragenden Welle 62 ist in der Mitte ein Kurbelarm 84 drehfest angebracht, an dem die Kolbenstange 86 eines Hydraulikzylinders 88 angreift, der um eine Achse 90 schwenkbar in dem Gestell 72 der Vorrichtung gelagert ist.

In der eingefahrenen Endlage der Kolbenstange 86 befinden sich die Klauen 76 in einer Lage, in der ihre Öffnung mit der Achse der aus den Ösen 8 der Kathodenplatten 6 herausgezogenen Tragstangen 10 fluchtet.

Beim Herausschieben der Kolbenstange 86 werden die von den Klauen 76 aufgenommenen Tragstangen 10 um 90° gedreht und auf Schienen 92 abgelegt, die in einem eine Vielzahl von Tragstangen 10 aufnehmenden Magazin 94 (Fig. 2) angebracht sind.

Das Magazin 94 ist in der Höhe verstellbar, so daß die Tragstangen 10 auf die übereinander angeordneten Schienen 92 aufgeschoben werden können. Es wird nach dem Füllen zur erneuten Verwendung der Tragstangen abtransportiert und durch ein leeres ersetzt.

Die von den Tragstangen 10 befreiten Kathodenplatten werden von dem zweiten Kettenförderer 14 mitgenommen. Bevor sie in die Waschkammern der Waschanlage 16 gelangen, werden sie durch Führungsleisten oder -rollen 29 in eine der bisherigen Stellung entgegengesetzte Schräglage von etwa 5° umgelegt. In dieser Lage werden sie durch Leisten oder Rollen 30, die sie in ihrer Schräglage halten, durch die Waschkammern 31, 32 und 33 hindurchgeführt, wobei sie durch heiße Wasserstrahlen, die auf die beiden Flachseiten der Platten und auch in den Bereich der Ösen 8 gerichtet sind, von anhaftenden Verunreinigungen befreit werden. Hierzu sind die Waschkammern an ihren beiden Längswänden mit über die Höhe der Platten verteilten Spritzdüsen 34 versehen (Fig; 7 und 8). Damit auch der Bereich unter den Ösen 8 von der Waschflüssigkeit getroffen wird, sind auf diesen Bereich gerichtete Düsen 36 an die Waschwasserleitung angeschlossen. Die Waschanlage ist in die drei Kammern unterteilt, von denen die letzte mit reinem Wasser, die dieser vorgeschalteten Kammern mit dem aus der jeweils nachfolgenden Kammer abfließenden Wasser beschickt werden.

Nach dem Verlassen der letzten Waschkammer 33 werden die Kathodenplatten durch Entlanggleiten an Rollen oder Leisten 38 weiter in der bisherigen Schräglage bis zu einer Neigung von etwa 45° umgelegt. In dieser Lage werden sie an ihren seitlichen Rändern oder im Bereich ihrer oberen Stirnkante von einer Greifvorrichtung 100 erfaßt und auf einem Stapelplatz abgelegt.

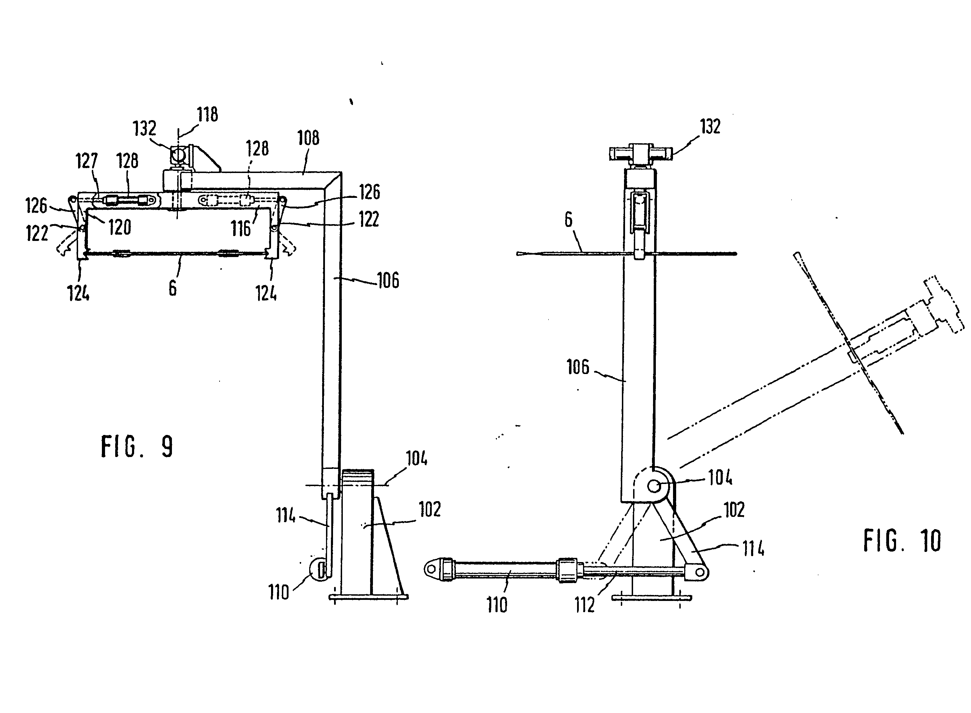

Diese Vorrichtung zum Erfassen und Ablegen der gereinigten Kathodenplatten 6 (Fig. 9 und 10) besteht aus einer an einem Sockel 102 um eine Achse 104 in der Vertikalebene senkrecht zur Förderrichtung des zweiten Kettenförderers 14 schwenkbar gelagerten Säule 106, die an ihrem oberen Ende mit einem Ausleger 108 versehen ist. Zum Verschwenken der Säule 106 dient ein hydraulischer Zylinder 110, dessen Kolbenstange 112 an einem am unteren Ende der Säule 106 befestigten Hebelarm 114 angreift. Am Ausleger 108 ist ein U-förmiger Tragbügel 116 um eine vertikale Achse 118 drehbar angebracht. Der Tragbügel 116 weist an seinen Schenkeln 120 je einen um eine Achse 122 schwenkbaren Greiferarm 124 auf.

Die Greiferarme sind mit einer rückwärtigen Verlängerung 126 versehen, an der die Kolbenstange 127 eines von zwei Hydraulikzylindern 128 angreift, die in dem Tragbügel 116 gelagert sind.

Zum Erfassen der in Schräglage auf dem Kettenförderer stehenden Kathodenplatten 6 wird die Säule 106 mit dem Tragbügel 116 soweit geneigt, daß die Greiferarme 124 in den Bereich der seitlichen Kanten der Kathodenplatten 6 gelangen.

Durch Betätigen der Zylinder 128 werden die Platten 6 von den Greiferarmen 124 erfaßt. Durch Zurückschwenken der Säule 106 mit Hilfe des Hydraulikzylinders 110 in die vertikale Stellung gelangen die Platten 6 über einen höhenverstellbaren Tisch 130, auf dem sie gestapelt werden. Von dort werden sie mit Hilfe einer - nicht gezeichneten-Fördervorrichtung zu Entnahmestellen gebracht; Da der Tragbügel 116 um die vertikale Achse 118 drehbar an dem Ausleger 108 gelagert ist, können die von den Greiferarmen 124 erfaßten Kathodenplatten 6 um diese Achse 118 gedreht und daher bei beliebiger Lage der Ösen 8 abgelegt werden. Zum Antrieb dieser Drehbewegung ist auf dem Ausleger 108 ein Hydraulikantrieb 132 angebracht, der eine Zahnstange hinund herverschiebt, die in ein auf einer mit dem Tragbügel 116 festverbundenen Welle aufgekeiltes Ritzel eingreift.

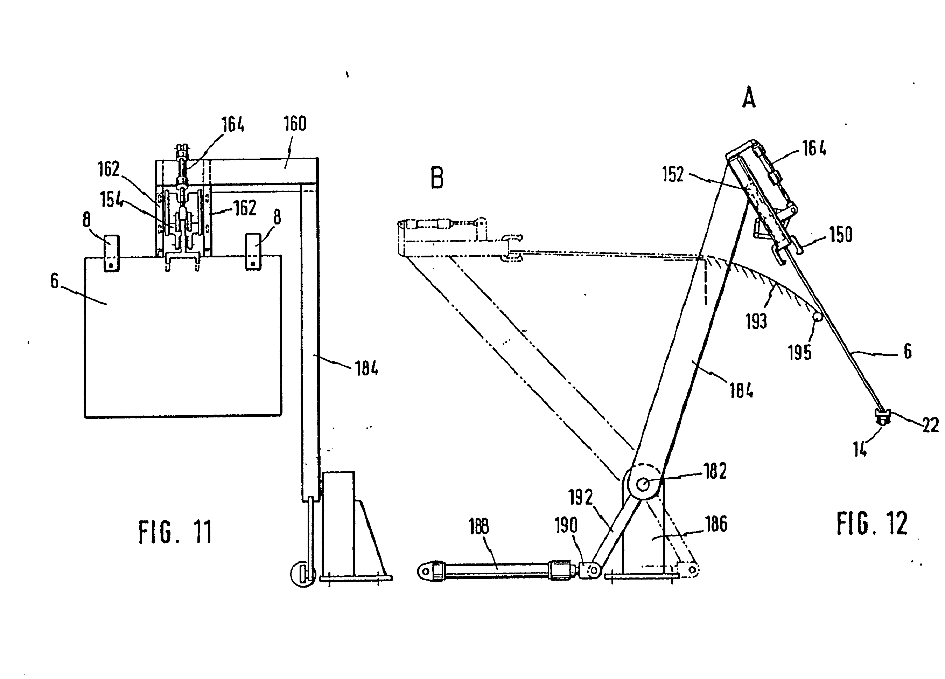

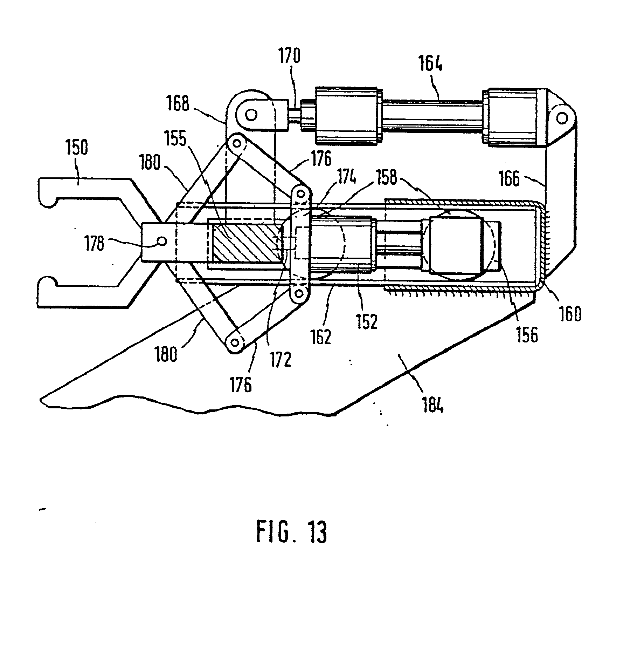

Bei einer zweiten Ausführungsform (Fig. 11, 12 und 13) der Vorrichtung 100 zum Erfassen und Ablegen der gereinigten Kathodenplatten 6 werden diese etwa in der Mitte ihrer oberen Kante von einem an einem Ausleger 160 angebrachten, zangenartigen Greifer 150 erfaßt. Dieser wird mit einem Hydraulikzylinder 152 geöffnet und geschlossen.

Der Greifer 150 und der Hydraulikzylinder 152 sind auf einem Wagen 154 angeordnet, der von zwei durch ein Zwischenstück 155 verbundenen Flacheisen 156 und vier Rädern 158 gebildet wird und in zwei an einem Ausleger 160 angebrachten U-Eisen 162 mit Hilfe eines weiteren Hydraulikzylinders 164 verschiebbar ist. Dieser ist an je einem an der Oberseite des Auslegers 160 und dem Zwischenstück 155 befestigten Arm 166 bzw. 168 mit seinem Zylinder bzw. seiner Kolbenstange 170 angelenkt.

Die Kolbenstange 172 des den zangenartigen Greifer 150 betätigenden Hydraulikzylinders 152 ist an dem Zwischenstück 155 des Wagens 154 befestigt. Bei Druckgabe auf den Zylinder 152 wird dieser auf dem Wagen zurückgeschoben. Dabei verschwenkt er über einen Mitnehmer 174 und zwei Lenkerarme 176 die um eine Achse 178 drehbaren Schenkel 180 des Greifers 150 mit und schließt den Greifer.

Der den Wagen 154 mit dem Greifer 150 aufnehmende Ausleger 160 ist unter einem solchen Winkel an einer um eine horizontale Achse 182 senkrecht zur Förderrichtung des zweiten Kettenförderers 14 schwenkbaren Säule 184 angebracht, daß die Verschieberichtung des Wagens 154 in der einen Endstellung A der Säule 184 in der Ebene der zu ergreifenden Kathodenplatte 6 liegt und in der anderen Endstellung B horizontal gerichtet ist. In dieser Stellung wird die Kathodenplatte auf dem Hebetisch 130 abgelegt. Zum Verschwenken der Säule 184, deren Drehachse 182 auf einem Sockel 186 angeordnet ist, dient ein Hydraulikzylinder 188, dessen Kolbenstange 190 an einem an der Säule angebrachten Arm 192 angreift. Beim Verschwenken der Säule aus ihrer Stellung A, in der die Kathodenplatten 6 von dem Greifer 150 erfaßt werden, in die Stellung B, in der die Platten in die waagerechte Lage gelangen, werden die Platten über eine gekrümmte Führungsfläche 193 gezogen, die zur Verringerung der Reibung mit einer oder mehreren Rollen 195 versehen ist.

Die Antriebe 12 und 15 der beiden Kettenförderer 4 und 14 und die Betätigung des Stößels 52 und der Stapelvorrichtungen 20 und 58 werden durch nicht dargestellte Steuermittel zeitlich so gesteuert, daß eine reibungslose Arbeitsweise der gesamten Vorrichtung sichergestellt ist.

Bei einer abgewandelten Vorrichtung, bei der die Kathodenbleche paarweise nebeneinander durch die Waschvorrichtung geführt werden, können jeweils zwei der auf dem ersten Kettenförderer zu der Übergabevorrichtung gelangenden Kathodenplatten so auf dem zweiten Kettenförderer aufgestellt werden, daß sie nebeneinander durch die Waschvorrichtung hindurchgefördert werden. Dabei stehen die Kathodenplatten im wesentlichen V-förmig gegeneinander geneigt mit sich nach oben erweiterndem Zwischenraum auf dem zweiten Kettenförderer, so daß die Spritzdüsen sowohl auf die einander zugekehrten Flächen der Kathodenplatten als auch auf die jeweils äußeren Flächen gerichtet werden können. Hinter der Waschvorrichtung werden die paarweise ankommenden Kathodenplatten zur dichten Anlage aneinander gebracht und dann gleichzeitig von der Vorrichtung zum Ablegen erfaßt.

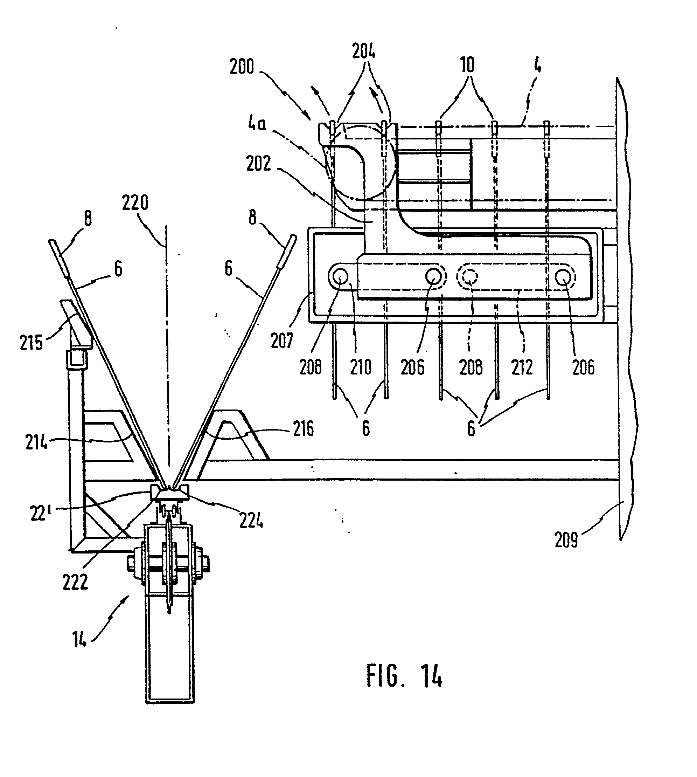

Fig. 14 zeigt eine derartige Vorrichtung, bei der die Kathodenplatten 6 jeweils paarweise von dem Kettenförderer 4 auf Abstützgliedern 22' des durch die Waschanlage 16 hindurchführenden Kettenförderers 14 aufgestellt werden. Hierzu dient eine Übertragungsvorrichtung 200, die am Ende des Kettenförderers 4 etwa im Bereich seiner Umkehrrolle 4a angebracht ist und auf jeder Seite dieses Förderers einen nach oben gerichteten Arm 202 aufweist, der an seinem oberen Ende im Abstand der auf dem Kettenförderer 4 aufgehängten Kathodenplatten mit Vertiefungen 204 versehen ist. An ihrem unteren Ende sind die Arme 202 auf je zwei Kurbelzapfen 206 gelagert, die von Kurbelarmen 210 und 212 getragen werden, die an zwei an Tragarmen 207 gelagerten synchron umlaufenden Wellen 208 befestigt sind; Die Tragarme 207 sind am Maschinengestell 209 angeschweißt. Sobald zwei Kathodenplatten die Umkehrrolle 4a des Kettenförderers 4 erreicht haben, werden sie bei Drehung der Wellen 208 mittels eines nicht dargestellten Antriebs von dem oberen Ende der Arme 202 in den Vertiefungen 204 erfaßt und angehoben, so daß sie von dem Kettenförderer 4 freikommen. Bei der weiteren Drehung der Wellen 208 werden die Kathodenplatten auf den Abstützgliedern 22' des Kettenförderers 14 abgesetzt. Dabei werden sie durch Führungen 214, 215 und 216 so geführt, daß sie V-förmig gegeneinander geneigt auf den Abstützgliedern 22' stehen. Dann werden die Tragstangen 10 aus den Ösen 8 der Kathodenplatten 6 mittels Ausstoßvorrichtungen ähnlich der Vorrichtung 50, 52 entfernt und die Kathodenplatten paarweise durch die Waschanlage 16 gefördert. Es sei bemerkt, daß sich die Führung 216 wegen der vorgenannten Anhebung der beiden ersten Kathodenplatten bei Drehung der Wellen 208 noch entsprechend weiter nach oben erstrecken kann, falls dies erwünscht ist. Die Abstützglieder 22' weisen im vorliegenden Fall vorzugsweise zwei Nuten 222 und 224 auf, die symmetrisch zur Mittellinie 220 angeordnet sind, um den Kathodenplatten auch im unteren Bereich einen gewissen Abstand zu geben.

Es ist auch möglich, die Übertragungsvorrichtung 200 so auszubilden, daß sie jeweils drei Kathodenplatten vom Kettenförderer 4 abhebt und fächerförmig auf die Abstützglieder des Kettenförderers 14 absetzt. In diesem Fall werden die Arme 202 mit drei im Abstand der Kathodenplatten voneinander angeordneten Vertiefungen 204 versehen, um jeweils drei Kathodenplatten vom Förderer 4 abzuheben. Die Übertragungsvorrichtung 200 wird dabei vorzugsweise so ausgelegt, daß die mittlere der drei Kathodenplatten etwa im Bereich der Mittellinie 220 abgesenkt wird. Dabei wird die mittlere Platte durch geeignete Führungseinrichtungen in etwa senkrechter Lage gehalten. Diese Führungseinrichtungen für die mittlere platte erstrecken sich vorzugsweise von der Stirnseite des Förderers 14 oberhalb des Abstützgliedes 22' rechts und links der Mittellinie 220 etwa in gleicher Höhe wie die Führung 216 in den Übergabebereich hinein. In der nachfolgenden Waschanlage 16 können entsprechende Führungen für die drei Kathodenplatten oberhalb des Kettenförderers 14 angeordnet sein. Bei der Übergabe von jeweils drei Kathodenplatten ist es zweckmäßig, die Abstützglieder 22' des Kettenförderers 14 mit drei Nuten zu versehen, um die unteren Enden der drei Kathodenplatten in einem vorbestimmten Abstand voneinander zu halten.

Bei entsprechender Ausbildung der Übertragungsvorrichtung und der Führungseinrichtungen können auch jeweils mehr als drei Kathodenplatten vom Kettenförderer 4 auf die entsprechend ausgebildeten Abstützglieder des Kettenförderers 14 fächerförmig abgesetzt werden.

Für den Fall, daß auf dem Kettenförderer 14 jeweils zwei etwa V-förmig oder jeweils drei oder mehr etwa fächerförmig gegeneinander geneigt stehende Kathodenplatten abgesetzt werden, muß die Waschvorrichtung 16 zusätzliche Düsen aufweisen, die sich von oben zwischen die beiden bzw. drei oder mehr Kathodenplatten erstrecken und auf ihre innen liegenden Flächen spritzen, und hinter der Waschvorrichtung sind in diesem Fall vorzugsweise Führungsmittel vorgesehen, die die beiden bzw. drei oder mehr Kathodenplatten zur im wesentlichen dichten Anlage aneinander bringen, so daß sie gemeinsam von entsprechend ausgebildeten Greifern 116 zum Ablegen auf dem Tisch 130 erfaßt werden können.

Anstelle der Übertragungsvorrichtung gemäß Fig. 3 kann auch die Übertragungsvorrichtung 200 gemäß Fig. 14 zum Überführen von jeweils einer Kathodenplatte ֆ benutzt werden, wenn die Arme 202 entsprechend ausgebildet und mit je nur einer Vertiefung 204 versehen werden.

Vorstehend wurde das Waschen von Kathodenplatten beschrieben. In analoger Weise können aber auch Anodenplatten gewaschen werden, wobei das Ausstoßen der Kathodenstangen entfällt. Im Falle von Abfallanoden, die eine stark unregelmäßig geformte untere Kante aufweisen, ist es jedoch zweckmäßig, anstelle der Übertragungsvorrichtung oder in Kombination mit dieser eine Greifervorrichtung zu verwenden, die die Anodenplatten, ähnlich wie die Greifervorrichtung gemäß Fig. 9 und 10, im Bereich ihrer beiden Stirnseiten, insbesondere im Bereich der Stirnseiten ihrer Tragohren, erfaßt, und jeweils die erste Anoden-platte aus dem Kettenförderer 4 bzw. aus der Übertragungsvorrichtung 200, vorzugsweise, wenn sich die Arme 202 in ihrer höchsten Stellung befinden, hebt und dann so dreht, daß die Abfallanoden auf den Kopf gestellt mit ihrer Kopfseite auf den Abstützgliedern des Kettenförderers 14 abgestellt werden. Dabei kann die Greifervorrichtung so ausgebildet werden, daß sie gleichzeitig oder nacheinander jeweils zwei oder mehr Anodenplatten auf den Abstützgliedern 22' des Kettenförderers 14 V-förmig bzw. fächerförmig absetzt.

**Patentansprüche**

1. Verfahren zum Reinigen von bei der elektrolytischen Raffination von Metallen, insbesondere Kupfer, durch Niederschlagen auf dünnen Startblechen gewonnenen Kathodenplatten, wobei die Kathodenplatten über Tragösen an Tragstangen hängend gruppenweise aus dem elektrolytischen Bad herausgehoben und dann mittels Wasserstrahlen gewaschen werden, dadurch gekennzeichnet, daß die Tragstangen vor dem Waschen durch Ausstoßen und/oder Ausziehen aus den Tragösen oder durch Auftrennen und/oder Abtrennen der Tragösen entfernt werden und die Kathodenplatten an ihrer Unterseite abgestützt in im wesentlichen senkrechter Lage einzeln oder paarweise etwa V-förmig gegeneinander geneigt oder zu dritt oder mehr etwa fächerförmig voneinander weggeneigt, hintereinander in einer sich etwa parallel zu ihren Flachseiten erstreckenden Richtung den Waschvorgang durchlaufen und mindestens die Flachseiten der Kathodenplatten mittels Düsen besprüht werden, die eine Relativbewegung entlang der Flachseiten ausführen.

2. Verfahren zum Reinigen von bei der elektrolytischen Raffination von Metallen, insbesondere Kupfer, aus dem elektrolytischen Bad entnommenen Anodenplatten, wobei die Anodenplatten mittels eines Kettenförderers, dessen Förderrichtung sich senkrecht zu der Flachseite der Anodenplatten erstreckt, an Tragohren hängend gruppenweise aus dem elektolytischen Bad herausgehoben und dann mittels Wasserstrahlen gewaschen werden, dadurch gekennzeichnet, daß die Anodenplatten vor dem Waschen mittels eines zweiten Kettenförderers, in im wesentlichen senkrechter Lage einzeln oder paarweise etwa V-förmig gegeneinander geneigt oder zu dritt oder mehr etwa fächerförmig voneinander weggeneigt, abgestützt und in der vorgenannten Lage gehalten hintereinander in einer sich etwa parallel zu ihren Flachseiten erstreckenden Richtung den Waschvorgang durchlaufen und daß mindestens die Flachseiten der Anodenplatten mittels eine Relativbewegung entlang der Flachseiten ausführenden Düsen besprüht werden.

3. Verfahren nach Anspruch 2, dadurch gekennzeichnet, daß zu waschende Abfallanodenplatten auf den Kopf gestellt, mit ihrer Kopfseite auf dem zweiten Kettenförderer abgestützt gewaschen werden.

4. Verfahren nach Anspruch 1, dadurch gekennzeichnet, daß die von den Kathodenplatten entfernten Tragstangen getrennt gewaschen und nach dem Waschen in einem Magazin gestapelt werden.

5. Verfahren nach Anspruch 1 oder 4, dadurch gekennzeichnet, daß bei Verwendung von Tragstangen mit einem die Tragfähigkeit erhöhenden, insbesondere rechteckigen Querschnittsprofil, das größere Abmessungen in der Höhe als in der Breite aufweist, die Tragstangen mit vorbestimmter Orientierung ihres Querschnittprofils im Magazin abgelegt werden.

6. Vorrichtung zum Reinigen von bei der elektrolytischen Raffination von Metallen, insbesondere Kupfer, durch Niederschlagen auf dünnen Startblechen gewonnenen Kathodenplatten, mit die Kathodenplatten nacheinander durch eine mit Spritzdüsen versehene Waschvorrichtung mit mehreren Waschkammern fördernden Fördermitteln, die einen die gruppenweise aus dem elektrolytischen Bad herausgehobenen, über Tragösen an Tragstangen hängenden Kathodenplatten senkrecht zu ihren Flachseiten fördernden Kettenförderer aufweisen, und mit einer der Waschvorrichtung nachgeschalteten Stapelvorrichtung zum bündelweise Stapeln der gereinigten Kathodenplatten, dadurch gekennzeichnet, daß die Fördermittel außer dem die Kathodenplatten (6) gruppenweise aufnehmenden und senkrecht zu ihren Flachseiten fördernden Kettenförderer (4) einen zweiten Kettenförderer (14) aufweisen, dessen Förderrichtung sich parallel zu den Flachseiten der Kathodenplatten (6) erstreckt, daß am Ende des ersten Kettenförderers (4) eine Übergabevorrichtung (21; 200) angeordnet ist, die die Kathodenplatten (6) einzeln etwa senkrecht oder paarweise etwa V-förmig gegeneinander geneigt oder zu dritt oder mehr etwa fächerförmig geneigt auf den zweiten Kettenförderer (14) aufstellt, daß der Übergabevorrichtung (21; 200) eine Vorrichtung (50, 54) zum Ausstoßen und Ausziehen von Tragstangen (10) zugeordnet ist, welche die Tragstangen (10) von den Kathodenplatten (6) nach deren Aufstellen auf den zweiten Kettenförderer (14) entfernt, daß der zweite Kettenförderer (14) die etwa senkrecht oder geneigt stehenden Kathodenplatten (6) sukzessive durch die Waschvorrichtung (16) hindurchfördert, deren Spritzdüsen (34, 36) eine Relativbewegung mindestens entlang den Flachseiten der Kathodenplatten (6) ausführen, und daß die Stapelvorrichtung (20) mit einem Greifer (116; 150) zum Erfassen und Ablegen der einzelnen Kathodenplatten (6) versehen ist.

7. Vorrichtung nach Anspruch 6, dadurch gekennzeichnet, daß in der Vorrichtung zum Ausstoßen und Ausziehen der Tragstangen (10) letztere mittels eines hydraulischen Stößels (52) ein erstes Stück verschoben und dann mittels Förderrollen (54) vollständig aus den Ösen (8) herausgezogen werden und daß im Bereich dieser Förderrollen (54) oder hinter denselben eine Waschvorrichtung (56) für die Tragstangen (10) vorgesehen ist, der eine Stapelvorrichtung (58) für die Tragstangen nachgeschaltet ist, die die Tragstangen (10) in einem Magazin (94) ablegt.

8. Vorrichtung nach Anspruch 7, dadurch gekennzeichnet, daß bei Verwendung von Tragstangen (10) mit einem die Tragfähigkeit erhöhenden Querschnittsprofil, das größere Abmessungen in der Höhe als in der Breite aufweist, die Stapelvorrichtung (58) für die Tragstangen (10) mit Greifern (76) versehen ist, die dem Querschnittsprofil der Tragstangen (10) so angepaßt sind, daß sie die Tragstangen (10) mit vorbestimmter einheitlicher Orientierung ihres Querschnittsprofils im Magazin (94) ablegen, vorzugsweise durch Drehen der Tragstangen (10) um 90° um ihre Längsachse, derart, daß sie mit ihrer größeren Querschnittsabmessung flach im Magazin (94) liegen.

9. Vorrichtung nach Anspruch 6, dadurch gekennzeichnet, daß die Spritzdüsen (34) der Waschvorrichtung (16) auf die Flachseiten der Kathodenplatten (6) gerichtet und über die Höhe der Kathodenplatten (6) verteilt sind, und daß weitere auf und in die Ösen (8) hinein gerichtete Spritzdüsen (36) zum Besprühen der Ösen (8) und der von diesen abgeschirmten Oberflächenbereiche der Kathodenplatten (6) vorgesehen sind.

10. Vorrichtung zum Reinigen von bei der elektrolytischen Raffination von Metallen, insbesondere Kupfer, aus dem elektrolytischen Bad entnommenen Anodenplatten, mit die Anodenplatten nacheinander durch eine mit Spritzdüsen versehene Waschvorrichtung mit mehreren Waschkammern fördernden Fördermitteln, die einen die gruppenweise aus dem elektrolytischen Bad herausgehobenen, an Tragohren hängenden Anodenplatten senkrecht zu ihren Flachseiten fördernden Kettenförderer aufweisen, und mit einer der Waschvorrichtung nachgeschalteten Stapelvorrichtung zum bündelweise Stapeln der gereinigten Anodenplatten, dadurch gekennzeichnet, daß die Fördermittel außer dem die Anodenplatten gruppenweise aufnehmenden und senkrecht zu ihren Flachseiten fördernden Kettenförderer (4) einen zweiten Kettenförderer (14) aufweisen, dessen Förderrichtung sich parallel zu den Flachseiten der Anodenplatten erstreckt, daß am Ende des ersten Kettenförderers (4) eine Übergabe-und Wendevorrichtung (21; 200) angeordnet ist, mit einer Greifervorrichtung, die die Anodenplatten im Bereich ihrer beiden Stirnseiten, insbesondere im Bereich der Stirnseiten ihrer Tragohren, erfaßt, wendet und einzeln etwa senkrecht oder paarweise etwa V-förmig gegeneinander geneigt oder zu dritt oder mehr etwa fächerförmig geneigt auf den Kopf gestellt mit ihrer Kopfseite auf Abstützgliedern (22; 22') des zweiten Kettenförderers (14) abstellt, daß der zweite Kettenförderer (14) die etwa senkrecht oder geneigt stehenden Anodenplatten sukzessive durch die Waschvorrichtung (16) hindurchfördert, deren Spritzdüsen (34, 36) eine Relativbewegung mindestens entlang den Flachseiten der Anodenplatten ausführen, und daß die Stapelvorrichtung (20) mit einem Greifer (116; 150) zum Erfassen und Ablegen der einzelnen Anodenplatten (6) versehen ist.

11. Vorrichtung nach einem oder mehreren der Ansprüche 6 bis 10, dadurch gekennzeichnet, daß der zweite Kettenförderer (14) Stützglieder (22; 22') aufweist, die mindestens eine sich nach oben erweiternde Rinne (24; 222, 224) besitzen, in welche bei der Übergabe der Platten (6) vom ersten (4) auf den zweiten Kettenförderer (14) die untere oder obere Kante der Platten (6) eingeführt wird und welche Anschläge (27, 28; 214, 215, 216) aufweisen, die die Platten (6) bei der Übergabe in einer in Förderrichtung des ersten Kettenförderers (4) um mindestens etwa 5° geneigten Schräglage halten.

12. Vorrichtung nach einem oder mehreren der Ansprüche 6 bis 11, dadurch gekennzeichnet, daß die in Bewegungsrichtung der Platten (6) letzte Kammer (33) der Waschvorrichtung (16) mit reinem Wasser, die dieser vorgeschalteten Kammern (31, 32) mit dem aus der jeweils nachfolgenden Kammer (32, 33) abfließenden Wasser beschickt werden.

13. Vorrichtung nach einem oder mehreren der Ansprüche 6 bis 12, dadurch gekennzeichnet, daß der Waschvorrichtung (16) Gleit- und/oder Rollenführungen (38) nachgeschaltet sind, die die platten (6) in eine Schräglage bis zu etwa 45° umlegen und daß zum Stapeln der gewaschenen Platten (6) ein vertikal bewegbarer Tisch (130) vorgesehen ist, dem eine um eine waagrechte Achse (104, 182) in Richtung auf die schrägliegenden Platten (6) schwenkbare Säule (106,184) mit einem um eine vertikale Achse drehbaren Ausleger (108, 160) zugeordnet ist, an dem der Greifer (116; 150) der Stapelvorrichtung (20) angebracht ist, der die schrägliegenden Platten (6) erfaßt.

14. Vorrichtung nach Anspruch 13, dadurch gekennzeichnet, daß der Greifer (116) der Stapelvorrichtung (20) U-förmig ausgebildet ist, die schrägliegenden Platten (6) an ihren Seitenkanten erfaßt und in waagrechter Lage auf dem vertikal bewegbaren Tisch (130) ablegt.

15. Vorrichtung nach Anspruch 13, dadurch gekennzeichnet, daß der Greifer (150) der Stapeleinrichtung (20) die schrägliegenden Platten (6) an ihrer vorderen Stirnseite erfaßt und die Platten beim Zurückschwenken der Säule (184) über eine gekrümmte Führungsfläche (193) in die waagrechte Lage auf den vertikal bewegbaren Tisch (130) zieht.

16. Vorrichtung nach einem oder mehreren der Ansprüche 6 bis 15, dadurch gekennzeichnet, daß der zweite Kettenförderer (14) mit Stützgliedern (22') zur Aufnahme jeweils zweier etwa V-förmig oder jeweils drei oder mehr etwa fächerförmig gegeneinander geneigt stehender Platten (6) versehen ist, daß die Waschvorrichtung (16) zwischen die beiden bzw. drei oder mehr Platten und auf ihre Flachseiten spritzende Düsen (34) aufweist und daß hinter der Waschvorrichtung Führungsmittel vorgesehen sind, die die beiden bzw. drei oder mehr Platten (6) zur im wesentlichen dichten Anlage aneinander bringen, so daß sie gemeinsam von Greifern zum Ablegen auf dem Tisch (130) erfaßt werden können.

**Claims**

1. Process for cleaning cathode plates obtained in the electrolytic refining of metals, in particular copper, by deposition on thin starting metal plates, the cathode plates being lifted via support eyes hanging in groups on support bars out of the electrolytic bath and then washed by means of water jets, characterized in that the support bars are removed prior to the washing by ejection and/or withdrawal from the support eyes or by cutting open and/or removal of the support eyes and the cathode plates supported at their lower side in substantially vertical position pass individually or in pairs inclined substantially V-shaped to each other or in threes or more inclined away from each other in substantially fan form in succession in a direction extending substantially parallel to their flat sides through the washing operation and at least the flat sides of the cathode plates are sprayed by means of jets which execute a relative movement along the flat sides.

2. Process for cleaning anode plates removed in the electrolytic refining of metals, in particular copper, from the electrolytic bath, the anode plates being lifted on support ears hanging in groups out of the electrolytic bath by means of a chain conveyor whose conveying direction extends perpendicularly to the flat side of the anode plates and then washed by means of water jets, characterized in that the anode plates prior to the washing by means of a second chain conveyor pass through the washing operation in substantially vertical position individually or in pairs inclined substantially V-shaped to each other or in threes or more inclined away from each other in substantially fan form, supported and held in the aforementioned position, in succession in a direction extending substantially parallel to their flat sides and at least the flat sides of the anode plates are sprayed by means of jets executing a relative movement along the flat sides.

3. Process according to claim 2, characterized in that the waste anode plates to be washed are washed placed on head with their head side supported on the second chain conveyor.

4. Process according to claim 1, characterized in that the support bars removed from the cathode plates are separately washed and after the washing stacked in a magazine.

5. Process according to claim 1 or 4, characterized in that when using support bars having a cross-sectional profile which increases the loadbearing capacity, in particular rectangular, and which has greater dimensions in its height than in its width, the support bars are placed in the magazine with predetermined orientation of their cross-sectional profile.

6. Apparatus for cleaning cathode plates obtained in the electrolytic refining of metals, in particular copper, by deposition on thin starting metal plates, comprising conveying means which convey the cathode plates successively through a washing apparatus provided with spraying jets and having a plurality of washing chambers, said conveying means having a chain conveyor conveying perpendicularly to their flat sides the cathode plates lifted in groups out of the electrolytic bath and hanging via support eyes on support bars, and a stacking apparatus following the washing apparatus for bundlewise stacking of the cleaned cathode plates, characterized in that the conveying means apart from the chain conveyor (4) receiving the cathode plates (6) in groups and conveying them perpendicularly to their flat sides comprises a second chain conveyor (14) whose conveying direction extends parallel to the flat sides of the cathod plates (6), that at the end of the chain conveyor (4) a transfer means (21; 200) is arranged which places the cathode plates (6) individually substantially perpendicularly or in pairs inclined substantially V-shaped to each other or in threes or more inclined in substantially fan form onto the second chain conveyor (14), that associated with the transfer means (21; 200) is a means (50, 54) for ejecting and withdrawing support bars (10) which removes the support bars (10) from the cathode plates (6) after the latter have been placed onto the second chain conveyor (14), that the second chain conveyor (14) conveys the substantially perpendicularly or inclined cathode plates (6) successively through the washing apparatus (16) whose spraying jets (34, 36) execute a relative movement at least along the flat sides of the cathode plates (6), and that the stacking means (20) is provided with a gripper (116; 150) for gripping and placing the individual cathode plates (6).

7. Apparatus according to claim 6, characterized in that in the means for ejecting and withdrawing the support bars (10) the latter are pushed a first distance by means of a hydraulic ram (52) and then withdrawn by means of conveying roller (54) completely out of the eyes (8) and that in the region of said conveying rollers (54) or behind the latter a washing means (56) for the support bars (10) is provided which is followed by a stacking means (58) for the support bars which places the support bars (10) in a magazine (94).

8. Apparatus according to claim 7, characterized in that when using support bars (10) having a cross-sectional profile which increases the loadbearing capacity and has greater dimensions in height than in width the stacking means (58) for the support bars (10) is provided with grips (76) which are adapted to the cross-sectional profile of the support bars (10) in such a manner that they place the support bars (10) with predetermined uniform orientation of their crosssectional profile in the magazine (94), preferably by turning the support bars (10) through 90' about their longitudinal axis, in such a manner that they lie with their greater cross-sectional dimension flat in the magazine (94).

9. Apparatus according to claim 6, characterized in that the spraying jets (34) of the washing means (16) are directed to the flat sides of the cathode plates (6) and distributed over the height of the cathode plates (6) and that further spraying jets (36) are provided directed onto and into the eyes (8) for spraying the eyes (8) and the surface regions of the cathode plates (6) screened thereby.

10. Apparatus for cleaning anode plates removed in the electrolytic refining of metals, in particular copper, from the electrolytic bath, comprising conveying means which convey the anode plates successively through a washing means provided with spraying jets and having a plurality of washing chambers and which comprise a chain conveyor conveying perpendicularly to their flat sides the anode plates removed in groups from the electrolytic bath and hanging on support ears, and a stacking means following the washing means for bundlewise stacking of the cleaned anode plates, characterized in that the conveying means apart from the chain conveyor (4) receiving the anode plates in groups and conveying them perpendicularly to their flat sides comprises a second chain conveyor (14) whose conveying direction extends parallel to the flat sides of the anode plates, that at the end of the first chain conveyor (4) a transfer and turning means (21; 200) is disposed comprising a gripper means which grips the anode plates in the region of their two end sides, in particular in the region of the end sides of their support ears, turns them and places them individually substantially perpendicularly or in pairs substantially V-shaped inclined to each other or in threes or more inclined substantially in fan form on their heads with their head side on support members (22; 22') of the second chain conveyor (14), that the second chain conveyor (14) conveys the substantially perpendicular or inclined anode plates successively through the washing means (16) whose spraying jets (34, 36) execute a relative movement at least along the flat sides of the anode plates, and that the stacking means (20) is provided with a gripper (116; 150) for gripping and depositing the individual anode plates (6).

11. Apparatus according to one or more of claims 6 to 10, characterized in that the second chain conveyor (14) comprises support members (22; 22') which have at least one upwardly widening channel (24; 222, 224) into which on transfer of the plates (6) from the first (4) to the second chain conveyor (14) the lower or upper edge of the plates (6) is introduced and which have stops (27, 28; 214, 215, 216) which hold the plates (6) on the transfer in an inclined position inclined at least about 5° in the conveying direction of the first chain conveyor (4).

12. Apparatus according to one or more of claims 6 to 11, characterized in that the last chamber (33) of the washing means (16) in the direction of movement of the plates (6) is charged with pure water and the chambers (31, 32) preceding it with water flowing out of the respective following chamber (32, 33).

13. Apparatus according to one or more of claims 6 to 12, characterized in that the washing means (16) is followed by slide and/or roller guides (38) which turn the plates (6) into an inclined position up to about 45° and that for stacking the washed plates (6) a vertically movable table (130) is provided with which is associated a columne (106, 104) pivotal about a horizontal axis (104, 182) in the direction towards the inclined plates (6) and having a cantilever arm (108, 160) which is rotatable about a vertical axis and on which the gripper (116; 150) of the stacking means (20) is mounted which grips the inclined plates (6).

14. Apparatus according to claim 13, characterized in that the gripper (116) of the stacking means (20) is made U-shaped, grips the inclined plates (6) at their side edges and places them in horizontal position on the vertically movable table (130).

15. Apparatus according to claim 13, characterized in that the gripper (150) of the stacking means (20) grips the inclined plates (6) at their front end side and pulls the plates on pivoting back of the column (184) over a curved guide face (193) into the horizontal position onto the vertically movable table (130).

16. Apparatus according to one or more of claims 6 to 15, characterized in that the second chain conveyor (14) is provided with support members (22') for receiving in each case two plates (6) inclined to each other substantially V-shaped or three or more inclined to each other substantially in fan form, that the washing means (16) comprises between the two or three or more plates jets (34) spraying onto their flat sides and that behind the washing means guide means are provided which bring into substantially tight engagement on each other the two or three or more plates (6) so that they can be gripped jointly by grippers for placing on the table (130).

**Revendications**

1. Procédé pour nettoyer les cathodes en forme de plaques obtenues durant l'affinage électrolytique de métaux, notamment de cuivre, par dépôt du métal sur de minces tôles nues, les plaques suspendues moyennant des oeils à des barres étant retirées par lots du bain électrolytique pour être ensuite lavées à l'aide de jets d'eau, caractérisé par le fait que les barres, avant le lavage, sont expulsées et/ou retirées des oeils, ou enlevées par ouverture ou coupure de ceux-ci, et que les cathodes soutenues par en bas et mises individuellement en position essentiellement verticale ou groupées par deux formant un V, ou par trois ou plusieurs plaques formant éventail, se déplacent à la file indienne dans une direction à peu près parallèle à leurs faces planes pour subir le lavage où au moins ces faces sont mouillées par projection du liquide au moyen de tuyères qui exécutent un mouvement relatif le long desdites faces des cathodes.

2. Procédé pour nettoyer les anodes en forme de plaques retirées du bain d'affinage électrolytique de métaux, notamment de cuivre, les plaques suspendues au moyen de crochets étant retirées par lots du bain électrolytique par un convoyeur à chaîne se déplaçant perpendiculairement aux faces planes de ces plaques qui sont alors lavées à l'aide de jets d'eau, caractérisé par le fait que les plaques, avant lavage, sont, par un deuxième convoyeur à chaîne, ou mises individuellement dans une position essentiellement verticale, ou groupées par deux formant un V, ou par trois ou davantage de plaques formant éventail, et qu'elles subissent dans cette position à la file indienne le lavage par déplacement à peu près parallèle à leurs faces planes, et qu'au moins celles-ci sont mouillées par projection du liquide par des tuyères exécutant un mouvement relatif le long de ces faces.

3. Procédé suivant la revendication 2, caractérisé par le fait que des anodes usées sont retournées, posées sur le deuxième convoyeur à chaîne et lavées dans cette position.

4. Procédé suivant la revendication 1, caractérisé par le fait que les barres de transport enlevées des cathodes sont lavées séparément et, après lavage, empilées dans un magasin.

5. Procédé suivant la revendication 1 ou 4, caractérisé par le fait qu'en cas d'utilisation de barres de transport ayant une section de préférence rectangulaire pour en augmenter la capacité de charge, et dont la hauteur dépasse la largeur, ces barres sont déposées dans le magasin après avoir été mises dans une position déterminée en fonction de leur section.

6. Dispositif pour nettoyer les cathodes en forme de plaques obtenues durant l'affinage électrolytique de métaux, notamment du cuivre, par dépôt du métal sur de minces tôles nues, avec des appareils de manutention déplaçant successivement les plaques à travers une installation de lavage comportant plusieurs chambres munies de tuyères, lesdits appareils de manutention consistant en un convoyeur à chaîne transportant perpendiculairement à leurs faces planes les cathodes retirées par lots du bain électrolytique et suspendues par des oeils à des barres de transport, et l'installation de lavage étant suivie d'un dispositif pour empiler par lots les cathodes lavées, caractérisé par le fait que les appareils de manutention comprennent outre le convoyeur à chaîne (4) qui reçoit les plaques (6) par lots et les transporte perpendiculairement à leurs faces planes, un deuxième convoyeur à chaîne (14) transportant les plaques (6) parallèlement à leurs faces planes, et qu'au bout du premier convoyeur (4) il est prévu un dispositif de transfert (21; 200) qui place les plaques (6) individuellement dans une position à peu près verticale, ou par groupes de deux formant un V, ou à trois ou plusieurs plaques faisant éventail, sur le deuxième convoyeur à chaîne (14), et que le dispositif de transfert (21; 200) est doté d'un dispositif (50, 54) pour faire expulser ou retirer des barres de transport (10) des cathodes (6) après leur mise en place sur le deuxième convoyeur (14), et que le deuxième convoyeur à chaîne (14) cheminent successivement les plaques (6) en position à peu près verticale ou inclinée à travers l'installation de lavage (16) dont les tuyères (34, 36) exécutent un mouvement relatif au moins le long des faces planes des plaques (6), et que le dispositif d'empilage (20) est munie d'un organe de préhension (116; 150) pour saisir et déposer les différentes plaques (6).

7. Dispositif suivant la revendication 6, caractérisé par le fait que dans le dispositif assurant l'expulsion et le retrait des barres de transport (10), celles-ci sont d'abord déplacées sur une certaine distance par un poussoir hydraulique (52) avant d'être retirées complètement des oeils (8) à l'aide de galets (54), et qu'au niveau ou en aval de ces galets (54) est prévu un poste de lavage (56) pour les barres de transport (10), suivi d'un dispositif d'empilage (58) pour faire déposer les barres de transport (10) dans un magasin (94).

8. Dispositif suivant la revendication 7, caractérisé par le fait qu'en cas d'utilisation de barres de transport (10) ayant une section plus haute que large, contribuant à augmenter la capacité de charge des barres, le dispositif d'empilage (58) est muni d'organes de préhension (76) dont le profil est adapté à la section des barres de transport (10) de sorte que celles-ci sont rangées dans le magasin (94) après avoir été mises dans une position déterminée en fonction de leur section, de préférence par rotation des barres (10) de 90° autour de leur axe longitudinal, de sorte à les poser à plat dans le magasin (94).

9. Dispositif suivant la revendication 6, caractérisé par le fait que les tuyères (34) de l'installation de lavage (16) sont dirigées sur les faces planes des cathodes (6) et distribuées sur la hauteur desdites cathodes, et qu'il est prévu d'autres tuyères (36) orientées sur et dans les oeils (8) pour laver ces oeils et les faces des plaques (6) autour d'eux.

10. Dispositif pour nettoyer les anodes en forme de plaques retirées du bain d'affinage électrolytique de métaux, notamment du cuivre, avec des appareils de manutention déplaçant successivement les plaques à travers une installation de lavage se composant de plusieurs chambres munies de tuyères, les appareils de manutention consistant en un convoyeur à chaîne déplaçant les anodes suspendues à des crochets et retirées par lots du bain électrolytique, perpendiculairement à leurs faces planes, et l'installation de lavage étant suivie d'un dispositif pour faire empiler par lots les anodes lavées, caractérisé par le fait que les appareils de manutention comprennent outre le convoyeur à chaîne (4) qui reçoit les anodes par lots et les transporte perpendiculairement à leurs faces planes, un deuxième convoyeur à chaîne (14) transportant les plaques parallèlement à leurs faces planes, et qu'au bout du premier convoyeur (4) il est prévu un dispositif de transfert (21; 200) avec un organe de préhension qui saisit les anodes par leurs bords, notamment par les bords où se trouvent les crochets de suspension, les retourne et les pose individuellement dans une position à peu près verticale, ou par groupes de deux formant un V, ou à trois ou plusieurs plaques faisant éventail, sur des supports (22; 22') du deuxième convoyeur à chaîne (14), et que ledit convoyeur (14) chemine les anodes à peu près verticales ou inclinées successivement à travers l'installation de lavage (16) dont les tuyères (34, 36) exécutent un mouvement relatif au moins le long des faces planes des plaques, et que le dispositif d'empilage (20) comporte un organe de préhension (116; 150) pour saisir et déposer les différentes plaques (6).

11. Dispositif suivant une ou plusieurs des revendications 6 à 10, caractérisé par le fait que le deuxième convoyeur à chaîne (14) comporte des supports (22; 22') qui sont munis au moins d'une rainure (24; 222, 224) évasée vers le haut où, lors du transfert des plaques (6) du premier (4) au deuxième (14) convoyeur à chaîne, est placé le bord inférieur ou supérieur de ces plaques, et qui comporte des butées (27, 28; 214, 215, 216) qui maintiennent, lors du transfert, les plaques (6) dans une position inclinée d'au moins environ 5° par rapport à la direction de déplacement du premier convoyeur à chaîne (4).

12. Dispositif suivant une ou plusieurs des revendications 6 à 11, caractérisé par le fait que la dernière chambre (33) de l'installation de lavage (16), vue dans le sens du déplacement des plaques (6), est alimentée en eau pure, les chambres (31, 32), précédentes, l'étant au moyen de l'eau s'écoulant de la chambre (32, 33) suivante.

13. Dispositif suivant une ou plusieurs des revendications 6 à 12, caractérisé par le fait qu'en aval de l'installation de lavage (16) sont prévues des glissières et/ou galets (38) qui mettent les plaques (6) dans une position inclinée d'environ 45°, et que, pour l'empilage des plaques (6) lavées, il est prévu une table (130) mobile verticalement avec laquelle coopère une colonne (106, 184) tournant autour d'un axe horizontal (104, 182) en direction des plaques (6), inclinées, et munie d'une flèche (108, 160) pivotant autour d'un axe vertical et qui comporte l'organe de préhension (116; 150) du dispositif d'empilage (20) qui saisit les plaques (6) en position inclinée.

14. Dispositif suivant la revendication 13, caractérisé par le fait que l'organe de préhension (116) du dispositif d'empilage (20) est en forme de U pour saisir par leur bord les plaques (6) en position inclinée, pour les déposer sur la table (130) mobile verticalement.

15. Dispositif suivant la revendication 13, caractérisé par le fait que l'organe de préhension (150) du dispositif d'empilage (20) saisit les plaques (6) en position inclinée par leur bord avant pour les transférer, lors de la rotation de la colonne (184), le long d'une face courbe (193) et les déposer en position horizontale sur la table (130) mobile verticalement.

16. Dispositif suivant une ou plusieurs des revendications 6 à 15, caractérisé par le fait que le deuxième convoyeur à chaîne (14) comporte des supports (22') pour deux plaques (6) formant à peu près un V, ou trois ou plusieurs plaques (6) faisant à peu près éventail, et que l'installation de lavage (16) présente des tuyères (34) projetant le liquide entre les deux ou trois ou davantage de plaques et sur leurs faces planes, et qu'en aval de l'installation de lavage sont prévus des guidages qui font appliquer les deux ou trois ou plusieurs plaques (6) l'une contre l'autre de sorte à les faire saisir ensemble par des organes de préhension pour les déposer sur la table (130).

FIG. 1

FIG. 2

FIG. 3

FIG. 4

# FIG. 5

# FIG. 6

FIG. 7

FIG.8

FIG. 10

FIG. 9

FIG. 11

FIG. 12

0 121 130

FIG. 13

FIG. 14